# EUROPEAN PATENT SPECIFICATION

(11) **EP 2 084 198 B1**
(45) Date of publication and mention of the grant of the patent: **10.02.2010**
(21) Application number: 07820889.9
(22) Date of filing: 03.10.2007
(51) Int. Cl.: C08G 18/08, C08G 18/38, C09D 175/04

(54) **COATING COMPOSITION**
BESCHICHTUNGSZUSAMMENSETZUNG
COMPOSITION DE REVÊTEMENT

(30) Priority: 20.11.2006 EP 06124402; 29.11.2006 US 861895 P
(43) Date of publication of application: 05.08.2009
(73) Proprietor: Akzo Nobel Coatings International BV, 6824 BM Arnhem (NL)
(72) Inventor: VAN DER VEN, Leendert Gerard Jan, 6815 DH Arnhem (NL); SCHOLTMEIJER, Harry, 5627 BE Eindhoven (NL)
(74) Representative: Schalkwijk, Pieter Cornelis
(86) International application number: PCT/EP2007/060512
(87) International publication number: WO 2008/061839

(56) References cited:
- WO-A-01/92362
- WO-A-2006/030029
- JP-A- 10 121 031

## Description

The invention relates to a coating composition comprising one or more polythiols, one or more polyisocyanates, and a base compound.

Coating compositions based on thiol-isocyanate crosslinking are disclosed in WO 2004/018115. The crosslinking chemistry is typically catalyzed by base catalysts. To delay crosslinking and increase the pot life, these base catalysts can be blocked. WO 06/ 030029 discloses an NCO-SH system with moisture-activatable base compounds such as oxazolidines. The drawback to this is that the curing rate becomes dependent on the moisture content of the ambient atmosphere. Moreover, the coating is more intensively catalyzed at its surface than below the coating surface.

WO 01/92362 discloses compositions based on thiol-isocyanate crosslinking using a photolatent base. To cure such coatings, the freshly applied layers need to be irradiated with actinic radiation of the right wavelengths. Hence, such coatings are less useful when large surfaces are to be coated, such as garage floors and the like. Moreover, some spots of the surface may be more difficult to irradiate. The curing speed on such shadow spots is low.

It is the object of the invention to provide an NCO-SH based coating composition with a controllable curing rate which is not dependent on external factors such as ambient moisture content or light. The pot life should preferably be at least 30 minutes, while on the other hand for most applications a curing time of less than 3 hours is to be preferred.

The object of the invention is achieved with a coating composition comprising one or more polythiols, one or more polyisocyanates, a base compound, and a carboxylic acid compound.

The use of acid compounds combined with base catalysts is known from NCO-OH curing systems, such as disclosed in US 4,617,286. In these prior art systems the acids are removed by reaction with the isocyanates, resulting in CO₂ formation. Consequently, such acid block catalysts can only be used in foaming systems and smooth coating films cannot be obtained. Surprisingly, it has now been found that in coating compositions based on NCO-SH curing, CO₂ formation is much lower and smooth films can be formed.

The carboxylic acid compound typically has less than 25, preferably less than 10 constituent carbon atoms and may be unsubstituted or substituted with other functional groups. Beta-keto (β-keto) acids and di-carboxylic acids - such as propanedioic (malonic) acid - are also envisaged for use in this invention. Preferably, however, the carboxylic acid is substituted with electron-withdrawing groups, with cyanoacetic acid or halogenated acetic acids being particularly preferred. Suitable examples of halogenated acetic acids are chloroacetic acid, di- and trichloroacetic acid or trifluoroacetic acid.

In a particular embodiment, an excess of acid is used in relation to the content of the basic compound. The acid compound and the base compound can for example be used in molar ratios of more than 2:1, e.g., in the range of from about 10:1 to about 15:1.

Typically, the base compound is used as a catalyst, such as amines. However, it is also possible to use other types of catalysts if the composition comprises other additives of a basic nature, such as basic pigments.

Suitable catalysts include amines, such as triethyl amine, triisooctyl amine, aldimine or metal complexes or metal salts wherein the metal is selected from the group of aluminium, titanium, zirconium, manganese, and hafnium. Good results are obtained when use is made of a catalyzing amount of complexes of zirconium or hafnium and diketones or alkylacetoacetates. Other suitable examples are the aluminium complex K-KAT^{®} XC5218 (ex King Industries), organic titanates such as titanium diisopropoxide 10 bis-2,4-pentadionate, available as Tyzor^{®} M from DuPont, N,N-dimethyl octyl amine (DMOA), available from Acros Organics, and N,N-dimethyl decyl amine (DMDA) available from Sigma-Aldrich. Further examples of satisfactory catalysts are disclosed in US-A-5,846,897.

If amine catalysts are used, the weight ratio of acid : amine can for example be in the range of 5:1 to 7:1. The acid content can for example be at least 0.06 wt.%, e.g., 0.09 wt.% or more.

The polythiol used in the coating composition should have at least two thiol groups. Similarly, the polyisocyanate should have at least two isocyanate groups. The equivalence ratio NCO : SH, the number of NCO groups relative to the number of SH groups, can for instance be between 1:2 and 2:1.

Suitable polythiols can be prepared by reacting hydroxyl group-containing compounds with thiol group-containing acids, such as 3-mercaptopropionic acid, 2-mercaptopropionic acid, thio-salicylic acid, mercaptosuccinic acid, mercaptoacetic acid, or cysteine. Examples of suitable hydroxyl group-containing compounds are diols, triols, and tetraols, such as 1,4-butane diol, 1,6-hexane diol, 2,2-dimethyl-1,3-propane diol, 2-ethyl-2-propyl-1,3-propane diol, 1,2-, 1,3-, and 1,4-cyclohexane diols, and the corresponding cyclohexane dimethanol, 1,1,1-trimethylol propane, 1,2,3-trimethylol propane, and pentaerythritol. Examples of compounds prepared according to such a method include pentaerythritol tetrakis (3-mercaptopropionate), pentaerythritol tetrakis (2-mercaptoacetate), trimethylol propane tris (3-mercaptopropionate), trimethylol propane tris (2-mercaptopropionate), and trimethylol propane tris (2-mercaptoacetate). Good results have been obtained with trimethylol propane tris (3-mercapto propionate) and pentaerythritol tetrakis (3-mercapto propionate). A further example of a compound prepared according to such a method consists of a hyperbranched polyol core based on a starter polyol, e.g., trimethylol propane, and dimethylol propionic acid. This polyol is subsequently esterified with 3-mercaptopropionic acid and isononanoic acid. These methods are described in EP-A 0 448 224 and WO 93/17060.

Other syntheses to prepare compounds comprising polythiols involve:
- the reaction of an aryl or alkyl halide with NaHS to introduce a pendent thiol group into the alkyl and aryl compounds, respectively;
- the reaction of a Grignard reagent with sulphur to introduce a pendent thiol group into the structure;
- the reaction of a polymercaptan with a polyolefin according to a Michael addition reaction, a nucleophilic reaction, an electrophilic reaction or a radical reaction;
- the reaction of a thiol-functional alcohol and an isocyanate-functional compound, and
- the reduction of disulphides.

The polythiol may for example have one or more hydroxyl groups and have a structure according to the following formula: T[(C₃H₆O)ₙCH₂CHOHCH₂SH]₃, with T being a triol such as trimethylol propane or glycerol. An example of such a compound is commercially available from Henkel under the trademark Henkel Capcure^{®} 3/800.

Alternatively, the polythiol may for instance be a resin having a polyester, polyurethane, polyacrylate, or polyether backbone. These isocyanate-reactive compounds may also comprise hydroxyl groups.

The polythiol may for instance be a polyester prepared from (a) at least one polycarboxylic acid or reactive derivatives thereof, (b) at least one polyol, and (c) at least one thiol-functional carboxylic acid. The polyesters preferably possess a branched structure. Branched polyesters are conventionally obtained through condensation of polycarboxylic acids or reactive derivatives thereof, such as the corresponding anhydrides or lower alkyl esters, with polyalcohols, when at least one of the reactants has a functionality of at least 3. Examples of suitable polycarboxylic acids or reactive derivatives thereof are tetrahydrophthalic acid, tetrahydrophthalic anhydride, hexahydrophthalic acid, hexahydrophthalic anhydride, methyl hexahydrophthalic acid, methyl hexahydrophthalic anhydride, dimethyl cyclohexane dicarboxylate, 1,4-cyclohexane dicarboxylic acid, 1,3-cyclohexane dicarboxylic acid, phthalic acid, phthalic anhydride, isophthalic acid, terephthalic acid, 5-tert. butyl isophthalic acid, trimellitic anhydride, maleic acid, maleic anhydride, fumaric acid, succinic acid, succinic anhydride, dodecenyl succinic anhydride, dimethyl succinate, glutaric acid, adipic acid, dimethyl adipate, azelaic acid, and mixtures thereof. Examples of suitable polyols include trimethylol propane, trimethylol ethane, glycerol, 1,2,6-hexane triol, ethylene glycol, 1,2-propylene glycol, 1,3-propylene glycol, 2-methylpropane-1,3-diol, neopentyl glycol, 2-butyl-2-ethyl-1,3-propane diol, cyclohexane-1,4-dimethylol, the monoester of neopentyl glycol and hydroxy-pivalic acid, hydrogenated Bisphenol A, 1,5-pentane diol, 3-methyl-pentane diol, 1,6-hexane diol, 2,2,4-trimethyl pentane-1,3-diol, dimethylol propionic acid, pentaerythritol, di-trimethylol propane, dipentaerythritol, and mixtures thereof. Examples of suitable thiol-functional organic acids include 3-mercaptopropionic acid, 2-mercaptopropionic acid, thio-salicylic acid, mercaptosuccinic acid, mercaptoacetic acid, cysteine, and mixtures thereof. Optionally, monocarboxylic acids and monoalcohols may be used in the preparation of the polyesters. Preferably, C₄-C₁₈ monocarboxylic acids and C₆-C₁₈ monoalcohols are used. Examples of the C₄-C₁₈ monocarboxylic acids include pivalic acid, hexanoic acid, heptanoic acid, octanoic acid, nonanoic acid, 2-ethylhexanoic acid, isononanoic acid, decanoic acid, lauric acid, myristic acid, palmitic acid, isostearic acid, stearic acid, hydroxystearic acid, benzoic acid, 4-tert. butyl benzoic acid, and mixtures thereof. Examples of the C₆-C₁₈ monoalcohols include cyclohexanol, 2-ethylhexanol, stearyl alcohol, and 4-tert. butyl cyclohexanol.

Alternatively, the polythiol may be a thiol-functional polyacrylate. Such a polyacrylate can be derived from (meth)acrylic monomers such as (meth)acrylic acid, methyl (meth)acrylate, butyl (meth)acrylate, a vinyl derivative such as styrene, and optionally hydroxy-functional acrylic monomers, such as hydroxyethyl (meth)acrylate, hydroxypropyl (meth)acrylate, hydroxybutyl (meth)acrylate, and the like, or mixtures thereof, with the terms (meth)acrylate and (meth)acrylic acid referring to both methacrylate and acrylate and methacrylic acid and acrylic acid, respectively. The thiol group can be introduced by the reaction product of dimethyl-m-isopropenyl benzyl isocyanate and mercapto ethanol. Alternatively, glycidyl methacrylate can be introduced into the polymer to prepare an epoxy-functional polyacrylate. The epoxy groups are then reacted with suitable thiol-functional organic acids such as mentioned above. The polyacrylate can be prepared by conventional methods, for instance, by the slow addition of appropriate monomers to a solution of an appropriate polymerization initiator, such as an azo or peroxy initiator.

Also included in the coating compositions of the invention may be di-, tri-, or higher thiol-functional diluents such as ethane dithiol or bis-beta-mercapto-ethyl sulphide. Preference is given to the use of higher molecular weight thiol-functional compounds, which may be obtained by reaction of a polythiol-functional compound with a polyisocyanate.

Suitable organic polyisocyanates include polyfunctional, preferably free polyisocyanates, with an average NCO functionality of 2.5 to 5, and may be (cyclo)aliphatic, araliphatic or aromatic in nature. The organic polyisocyanate may be blocked. The polyisocyanate may include biuret, urethane, uretdione, and isocyanurate derivatives. Examples of these organic polyisocyanates include 1,6-diisocyanatohexane, isophorone diisocyanate, 2,4-toluene diisocyanate, 2,6-toluene diisocyanate, diphenyl methane-diisocyanate, 4,4'-bis(isocyanato-cyclohexyl) methane, 1,4-diisocyanatobutane, 1,5-diisocyanato-2,2-dimethyl pentane, 2,2,4-trimethyl-1,6-diisocyanatohexane, 1,10-diisocyanatodecane, 4,4-diisocyanato-cyclohexane, 2,4-hexahydrotoluene diisocyanate, 2,6-hexahydrotoluene diisocyanate, norbornane diisocyanate, 1,3-xylylene diisocyanate, 1,4-xylylene diisocyanate, 1-isocyanato-3-(isocyanato methyl)-1-methyl cyclohexane, m-α,α-α',α'-tetramethyl xylylene diisocyanate, the above-mentioned derivatives thereof, and mixtures thereof. Normally, these products are liquid at ambient temperature and commercially available in a wide range. Particularly suitable isocyanate curing agents are triisocyanates and adducts. Examples thereof are 1,8-diisocyanato-4-(isocyanatomethyl) octane, the adduct of 3 moles of toluene diisocyanate to 1 mole of trimethylol propane, the isocyanurate trimer of 1,6-diisocyanatohexane, the isocyanurate trimer of isophorone diisocyanate, the uretdione dimer of 1,6-diisocyanatohexane, the biuret trimer of 1,6-diisocyanatohexane, the adduct of 3 moles of m-α,α-α',α'-tetramethyl xylene diisocyanate to 1 mole of trimethylol propane, and mixtures thereof. Cyclic trimers (isocyanurates) and uretdiones of 1,6-hexane diisocyanate and isophorone diisocyanate can also be used. Usually these compounds contain small quantities of their higher homologues.

Optionally, a hydroxyl-functional compound comprising at least two hydroxyl-functional groups may be present in the curable material. The hydroxyl-functional compound comprising at least two hydroxyl-functional groups may be selected from polyester polyols, polyether polyols, polyacrylate polyols, polyurethane polyols, cellulose acetobutyrate, hydroxyl-functional epoxy resins, alkyds, and dendrimeric polyols such as described in WO 93/17060. Also, hydroxyl-functional oligomers and monomers, such as castor oil and trimethylol propane, may be included. A suitable polyol is an acrylate polyol, such as for example Setalux^{®} 1157 available from Nuplex.

The polyisocyanate can be mixed with the polythiols by any suitable technique. However, simply stirring usually is sufficient. Sometimes it can be useful to dilute the polyisocyanate somewhat with an organic solvent such as ethyl acetate, butyl acetate or 1-methoxy-2-propyl acetate to reduce its viscosity.

The pot life of the coating composition at ambient temperature usually is more than a quarter of an hour, e.g. more than half an hour, up to about 5 hours or even longer, depending on the catalysts used.

The composition according to the present invention can be a solvent borne composition or a solvent-free composition. If liquid oligomers are used, the composition can be especially suitable for use as a high-solids composition or a solvent-free composition. The coating composition can also be used in powder coating compositions, water borne coating compositions, and hot melt coating compositions. Preferably, the theoretical volatile organic content (VOC) in the composition is less than about 450 g/l, more preferably less than about 350 g/l, most preferably less than about 250 g/l, or even less than 100 g/l.

For solvent borne formulations, suitable solvents include for instance methoxypropyl acetate and acetone. For water borne compositions, co-solvents or humectants may be used if so desired.

The coating compositions may further comprise other ingredients, additives or auxiliaries, such as pigments, dyes, emulsifiers (surfactants), pigment dispersion aids, photosensitizers, levelling agents, anti-cratering agents, antifoaming agents, antisagging agents, heat stabilizers, UV absorbers, antioxidants, and fillers.

Where the coating composition of the present invention is prepared as a two-component system, i.e. a first component comprising the (poly)thiol compound and a second component comprising the (poly)isocyanates, it is preferred to introduce pigments into the composition within the first (poly)thiol component.

The coating composition of the present invention can be applied to any substrate. The substrate may be, for example, metal, plastic, wood, glass, ceramic, or some other coating layer. The other coating layer may be comprised of the coating composition of the current invention or it may be a different coating composition. The coating compositions of the current invention show particular utility as a floor coating, e.g. on concrete floors, or as a coating or repair coating, e.g. as a primer or as a clear coat, for vehicles, such as cars, trains, airplanes or the like.

The coating compositions can be applied by conventional means such as by spray gun, brush, or roller. Curing temperatures are generally between -30° and 100°C, e.g., between -10° and 30°C.

The invention is further illustrated by the following examples. In these examples the compositions listed below are available as indicated.

| | |
|---|---|
| Byk^{®} 310 | levelling agent, available from Byk Chemie, 25% solids in xylene; |
| Byk^{®} 410 | thixotropic agent, available from Byk Chemie, 52% solids in NMP; |
| Sag^{®} 100E | foam control agent from Crompton; |
| Tolonate^{®} HDT LV2 | hexane diisocyanate trimer, available from Rhodia. |

In the examples, the pot life was determined by brushing the paint at several intervals after mixing all three components and seeing whether or not the paint could still be applied to any substrate without difficulty and gave a good looking coating film after curing.

In the examples, the coating compositions were applied onto hardboard, MDF or concrete and allowed to dry under ambient conditions. The coating was considered to be "touch-dry" when a flake of cottonwool, placed on the coating and loaded with a 1 kg weight for 10 seconds, could be blown off without leaving any hairs in the coating. The coating was considered to be fully cured when the coating was so hard and cured throughout the film that one could walk on it and any imprints resulting from loading the samples with the weight of one man on one foot could be wiped off, leaving no marks in the coating.

### Example 1

Stoichiometric amounts of pentaerythritol-tetra-3-mercaptopropionate and Tolonate^{®} HDT-LV2 were mixed and 0.6% (m/m) of a liquid catalyst solution, containing 3.6 g of cyanoacetic acid, 0.5 g of N,N-dimethyl octyl amine, and 16.7 g of methoxypropyl acetate, was added to this mixture and stirred in thoroughly.

The pot life was found to be 35 - 45 minutes at an ambient temperature of 20-25°C. The films were touch-dry after 1-1½ hours and fully cured after 1½-2 hours.

### Example 2

A thixotropic version of the liquid catalyst solution was prepared by dissolving 3.0 g of cyanoacetic acid, 0.5 g of N,N-dimethyl octyl amine, and 10.0 g of Byk^{®} 410 in 50.0 g of acetone. An amount of 3.2% (m/m) of the catalyst solution was added to the stoichiometric mixture of pentaerythritol-tetra-3-mercaptopropionate and Tolonate^{®} HDT-LV as prepared in Example 1.

The pot life of this thixotropic version was 30 minutes. The films were touch-dry after 1-1½ hours and fully cured after 1½-2 hours. The paint did not sag when applied by brush or roller onto vertical surfaces.

### Example 3

A clear coat was prepared with a first component comprising 990.0 g of pentaerythritol tetra(3-mercaptopropionate), 22.5 g of methoxypropyl acetate, 12.5 g of Byk^{®} 310, 0.5 g of Sag^{®} 100E, 3.0 g of cyanoacetic acid, and 0.5 g of N,N-dimethyl octyl amine, mixed thoroughly. The second component consisted of Tolonate^{®} HDT LV2. The first and second components were mixed together in such quantities that the amounts of thiol- and isocyanate-functional groups were substantially equal.

The pot life and the cure time of the resulting transparent coating, when applied by brush or roller at ambient temperature, were 35 - 45 minutes and 1.5 - 2 hours, respectively.

### Example 4

The clear coat version of Example 3 was thinned to spray application viscosity by adding an additional 157.5 g of methoxypropyl acetate. A pot life of over 1 hour was achieved with the cure time still being approximately 2 hours. Due to the still relatively low VOC and the very good flow after application, a high layer thickness could be built up by spray-coating.

### Example 5

The pot life of the sprayable clear coat version of Example 4 could be extended to more than 5 hours by using the alternative amounts of 0.1 g of cyanoacetic acid and 6 mg of N,N-dimethyl octyl amine instead of the aforementioned amounts, while the cure time was still only one night (≤ 16 hours).

### Examples 6 to 10

Five two-component coating compositions were prepared, for each of which the first component contained pentaerythritol 3-mercaptopropionate and pigments, and the second component was pure polyisocyanate Tolonate HDT LV2. After mixing these stoichiometrically with respect to the binders, 0.2% (m/m) of a liquid catalyst (LC) solution, containing 13.32 g of one of the five carboxylic acids listed in Table 1 below, 2.22 g of N,N-dimethyl decyl amine (DMDA, Aldrich, ≥90%), and 84.46 g of methoxypropylacetate (MPA), was added to this mixture and stirred in thoroughly.

The pot life and the cure time of these five compositions were then examined and the ratio of pot life to cure time was determined. The results are shown in Table 1.

**Table 1**

| EXAMPLE | CARBOXYLIC ACID | POTLIFE (P / MIN) | CURETIME (C / MIN) | P/C |
|---|---|---|---|---|
| 6 | CYANOACETIC ACID | 30 | 75 | 0.40 |
| | (CAA, ACROS ORGANICS, 98%) | | | |
| 7 | PHENYLACETIC ACID | 5 | 22 | 0.23 |
| | (PAA, SIGMA-ALDRICH, 99%) | | | |
| 8 | MALONIC ACID | 90 | 170 | 0.53 |
| | (MA, SIGMA-ALDRICH, 99%) | | | |
| 9 | CHLOROACETIC ACID | 33 | 70 | 0.47 |
| | (CHLAA, SIGMA-ALDRICH, 99%) | | | |
| 10 | TRICHLOROACETIC ACID | 255 | 480 | 0.53 |
| | (TCHLAA, SIGMA-ALDRICH, 98%) | | | |

### Example 11

A waterborne two-component coating composition was prepared, of which the first component contained a dilute aqueous polyacrylate used as an emulsifier, pentaerythritol 3-mercaptopropionate as the binder, and 0.65% (m/m) of the liquid catalyst (LC) solution mentioned in Example 6, and the second component was a hydrophilic polyisocyanate, Rhodocoat EZ-D 803, diluted with methoxypropyl acetate to matching viscosity.

Further two-component coating compositions were prepared which differed from the above composition in that the liquid catalyst (LC) solutions of Examples 7 to 10 were used in place of that of Example 6.

When these coating compositions were mixed stoichiometrically with respect to the binders and subsequently applied on a substrate by brush, a smooth and clear coating layer was obtained after drying and curing. This result was also obtained when the polyisocyanates Rhodocoat EZ-M 502 and Bayhydur XP 2655 were used in place of Rhodocoat EZ-D 803 in these coating compositions.

### Example 12

The first and second components of a two-component composition were prepared. The first component contained 97% pentaerythritol 3-mercaptopropionate, 0.25% Byk 310, and 2.75% (m/m) of a dilute liquid catalyst solution, which in turn contained 17.36% of cyanoacetic acid, 0.64% of N,N-dimethyl decylamine, and 82% butyl acetate. The second component was pure Tolonate HDT LV2.

In a first part of this example, the two components were mixed stoichiometrically with respect to the binders, following which the mixture was diluted to spray viscosity with butyl acetate. The pot life and the cure time of this system were approximately 45 minutes and 3 hours, respectively.

In a second part of this example, only the first component was diluted with butyl acetate. The so-diluted first component and the second component - in stoichiometric amounts with respect to the binders - were introduced into a two-component spray application device wherein the first and second components were mixed during spraying. A pot life of over 1 hour was achieved with the cure time still being approximately 3 hours.

## Claims

1. Coating composition comprising one or more polythiols, one or more polyisocyanates, and a base compound, **characterized in that** the composition further comprises a carboxylic acid compound.

2. Coating composition according to claim 1, **characterized in that** the carboxylic acid compound comprises less than 25 carbon atoms.

3. Coating composition according to claim 2, **characterized in that** the carboxylic acid compound is substituted with an electron-withdrawing group.

4. Coating composition according to claim 3, **characterized in that** the carboxylic acid is selected from the group of beta-keto (β-keto) acids, propanedioic (malonic) acid, cyanoacetic acid and halogenated acetic acids, such as dichloroacetic acid or trifluoroacetic acid.

5. Coating composition according to any one of the preceding claims, **characterized in that** the molar amount of the carboxylic acid compound is in excess of the molar amount of the basic compound.

6. Coating composition according to claim 5, **characterized in that** the molar ratio of carboxylic acid compound : basic compound is at least 2:1, e.g. at least 10:1.

7. Coating composition according to any one of the preceding claims, **characterized in that** the basic compound is an amine catalyst.

## Patentansprüche

1. Beschichtungszusammensetzung, umfassend ein oder mehrere Polythiole, ein oder mehrere Polyisocyanate und eine basische Verbindung, **dadurch gekennzeichnet, dass** die Zusammensetzung weiter eine Carbonsäureverbindung umfasst.

2. Beschichtungszusammensetzung nach Anspruch 1, **dadurch gekennzeichnet, dass** die Carbonsäureverbindung weniger als 25 Kohlenstoffatome umfasst.

3. Beschichtungszusammensetzung nach Anspruch 2, **dadurch gekennzeichnet, dass** die Carbonsäureverbindung mit einem elektronenziehenden Rest substituiert ist.

4. Beschichtungszusammensetzung nach Anspruch 3, **dadurch gekennzeichnet, dass** die Carbonsäure aus der Gruppe aus beta-Ketosäuren (β-Ketosäuren), Propandisäure (Malonsäure), Cyanoessigsäure und halogenierten Essigsäuren, wie z.B. Dichloressigsäure oder Trifluoressigsäure, ausgewählt ist.

5. Beschichtungszusammensetzung nach einem der vorhergehenden Ansprüche, **dadurch gekennzeichnet, dass** die Molmenge der Carbonsäureverbindung im Überschuss zur Molmenge der basischen Verbindung vorliegt.

6. Beschichtungszusammensetzung nach Anspruch 5, **dadurch gekennzeichnet, dass** das Molverhältnis von Carbonsäureverbindung:basischer Verbindung mindestens 2:1, z.B. mindestens 10:1, beträgt.

7. Beschichtungszusammensetzung nach einem der vorhergehenden Ansprüche, **dadurch gekennzeichnet, dass** die basische Verbindung ein Amin-Katalysator ist.

## Revendications

1. Composition de revêtement comprenant un ou plusieurs polythiols, un ou plusieurs polyisocyanates et un composé basique, **caractérisée en ce que** la composition comprend en outre un composé d'acide carboxylique.

2. Composition de revêtement selon la revendication 1, **caractérisée en ce que** le composé d'acide carboxylique comprend moins de 25 atomes de carbone.

3. Composition de revêtement selon la revendication 2, **caractérisée en ce que** le composé d'acide carboxylique est substitué avec un groupe attracteur d'électrons.

4. Composition de revêtement selon la revendication 3, **caractérisée en ce que** l'acide carboxylique est choisi dans le groupe des bêta-céto (β-céto) acides, de l'acide propanedioïque (malonique), de l'acide cyanoacétique et des acides acétiques halogénés, comme l'acide dichloroacétique ou l'acide trifluoroacétique.

5. Composition de revêtement selon l'une quelconque des revendications précédentes, **caractérisée en ce que** la quantité molaire du composé d'acide carboxylique est en excès par rapport à la quantité molaire du composé basique.

6. Composition de revêtement selon la revendication 5, **caractérisée en ce que** le rapport molaire composé d'acide carboxylique : composé basique est d'au moins 2 : 1, par exemple d'au moins 10 : 1.

7. Composition de revêtement selon l'une quelconque des revendications précédentes, **caractérisée en ce que** le composé basique est un catalyseur aminé.
